# EUROPÄISCHE PATENTSCHRIFT

(11) **EP 1 040 245 B1**
(45) Veröffentlichungstag und Bekanntmachung des Hinweises auf die Patenterteilung: **03.07.2002**
(21) Anmeldenummer: 98966349.7
(22) Anmeldetag: 16.12.1998
(51) Int. Cl.: E05C 3/04, E05B 9/08

(54) **VORREIBERVERSCHLUSS FÜR DICKWANDIGE TÜREN, KLAPPEN ODER DGL.**
CASEMENT FASTENER CLOSURE FOR THICK-WALLED DOORS, SHUTTERS OR THE LIKE
TOURNIQUET POUR PORTES, VOLETS OU SIMILAIRES A PAROI EPAISSE

(30) Priorität: 19.12.1997 DE 29722488 U
(43) Veröffentlichungstag der Anmeldung: 04.10.2000
(73) Patentinhaber: Ramsauer, Dieter, D-42555 Velbert (DE)
(72) Erfinder: Ramsauer, Dieter, D-42555 Velbert (DE)
(74) Vertreter: Stratmann, Ernst, Dr.-Ing.
(86) Internationale Anmeldenummer: EP9808259
(87) Internationale Veröffentlichungsnummer: WO9932746

(56) Entgegenhaltungen:
- DE-U- 8 911 765
- DE-U- 29 615 837
- FR-A- 2 664 642
- US-A- 5 491 993
- US-A- 5 678 437

## Beschreibung

### TECHNISCHES GEBIET

Die Erfindung betrifft einen Vorreiberverschluß für dickwandige Türen, Klappen oder dgl., umfassend ein die Betätigungswelle des Vorreibers drehbar lagerndes Gehäuse, dessen Umfang ein Gewinde und axial verlaufende Abflachungen, Rücksprünge oder dgl. aufweist, und auf das eine mit Gewindebohrung für das Umfangsgewinde des Gehäuses versehene Befestigungsplatte aufschraubbar ist, die zusammen mit einer weiteren, einen nicht-runden Durchbruch aufweisenden, auf das Gehäuse drehstarr aufschiebbaren Platte mittels Holzschrauben oder dgl. auf der Rückseite der Tür, Klappe oder dgl. befestigbar ist.

### STAND DER TECHNIK

Ein Vorreiberverschluß ähnlich der eingangs genannten Art ist **aus der US-A-5,678,437** bekannt. Eingesetzt werden derartige Vorreiber dann, wenn die dickwandigen Türen oder Klappen vorher nicht genau festlegbare oder unterschiedliche Dicken aufweisen und erreicht werden soll, daß der Vorreiberverschluß an diese unterschiedlichen Türdicken anpassbar ist. Des weiteren soll die Stirnfläche des Vorreiberverschlusses möglichst wenig über die Vorderfläche des Türblatts oder dgl. vorspringen oder zurückspringen, sondern vorzugsweise mit dieser bündig verlaufen. Eine derartige Bündigkeit erlaubt es nicht, daß das Gehäuse des Vorreiberverschlusses einen Flansch besitzt, mit dem er sich auf die Vorderfläche des Türblatts oder dgl. abstützen kann. Eine Ausführungsform, bei der ein derartiges mit Flansch versehenes Vorreibergehäuse einfach durch eine rückseitig aufgebrachte Überwurfmutter befestigt ist, ist in diesen Fällen daher nicht anwendbar.

Um gleichwohl eine radiale und axiale Befestigung des Vorreibergehäuses zu ermöglichen, dienen die eingangs erwähnten Platten, die mittels vorzugsweise zweier z. B. holzschraubenartiger Befestigungsmittel auf der rückseitigen Oberfläche des Türblatts oder dgl. befestigt werden. Nachteilig sind gelegentlich Montage- und Stabilitätsprobleme.

### AUFGABE DER ERFINDUNG

Aufgabe der Erfindung ist, diese Probleme zu beseitigen und zudem weitere Varianten der eingangs genannten Anordnung zu schaffen, um so bessere Anpassungsmöglichkeiten für verschiedene Anwendungsfälle zu erhalten.

### LÖSUNGSWEGE

Gelöst wird die Aufgabe dadurch, daß die auf das Gehäuse aufschiebbare Platte eine Vertiefung bildet, in der die auf das Gehäuse aufschraubbare Platte drehfest aufnehmbar ist.

Damit ergibt sich die Möglichkeit, durch entsprechend weites Aufschrauben der aufschraubbaren Platte auf dem Gewinde des Gehäuses eine Anpassung an die Dicke der jeweiligen Tür oder Klappe oder dgl. vorzunehmen. Die zweite Platte sorgt dann für die Drehfestigkeit, so daß mit dem Einlegen der einen Platte in die andere Platte und dem Verschrauben der Anordnung auf der Rückseite des Türblatts oder dgl. dann eine dreh- und axialverschiebungsfeste Anordnung erreicht wird.

Vorzugsweise ist der Vorreiberverschluß derart ausgestaltet, das im Bereich der Aufnahme für den Betätigungsschlüssel das Gehäuse einen über den Querschnitt des Außengewindes vorspringenden Bund oder Schlüsselfang bildet. In einem solchen Falle ist es günstig, wenn die aufnehmbare Platte einen ersten Axialabschnitt bildet, der eine runde Außenkontur aufweist, mit einem Durchmesser annähernd gleich dem Bundaußendurchmesser, und einem zweiten aufnehmbaren Querschnitt mit unrunder, wie quadratischer Außenkontur und einem maximalen Durchmesser, wie Querverbindung zwischen sich gegenüberliegenden Ecken des Quadrats, der größer ist als der Bundaußendurchmesser. Auf diese Wiese wird erreicht, daß das Vorreibergehäuse sowohl im Bereich seines vorderen Bundes, wie auch im Bereich seiner hinteren Schraubbefestigung innerhalb des Türdurchbruches sicher geführt wird.

Einer besonders feinen Einstellbarkeit dient es, wenn die aufgenommene Platte die Form einer üblichen sechskantigen Überwurfmutter hat und die aufnehmende Platte eine Einsenkung aufweist, die ein Sechs- oder gar Zwölfeck bildet. Damit wird eine Verstellbarkeit in Schritten von 60° bzw. sogar 30° ermöglicht. Ein derartiges Bauteil kann vorzugsweise in Spritzgußtechnik hergestellt sein.

Alternativ kann aber auch die Stanztechnik dazu dienen, die Platten herzustellen.

### KURZE BESCHREIBUNG DER ERFINDUNG

Die Erfindung wird nachfolgend anhand von Ausführungsbeispielen näher erläutert, die in den Zeichnungen dargestellt sind.

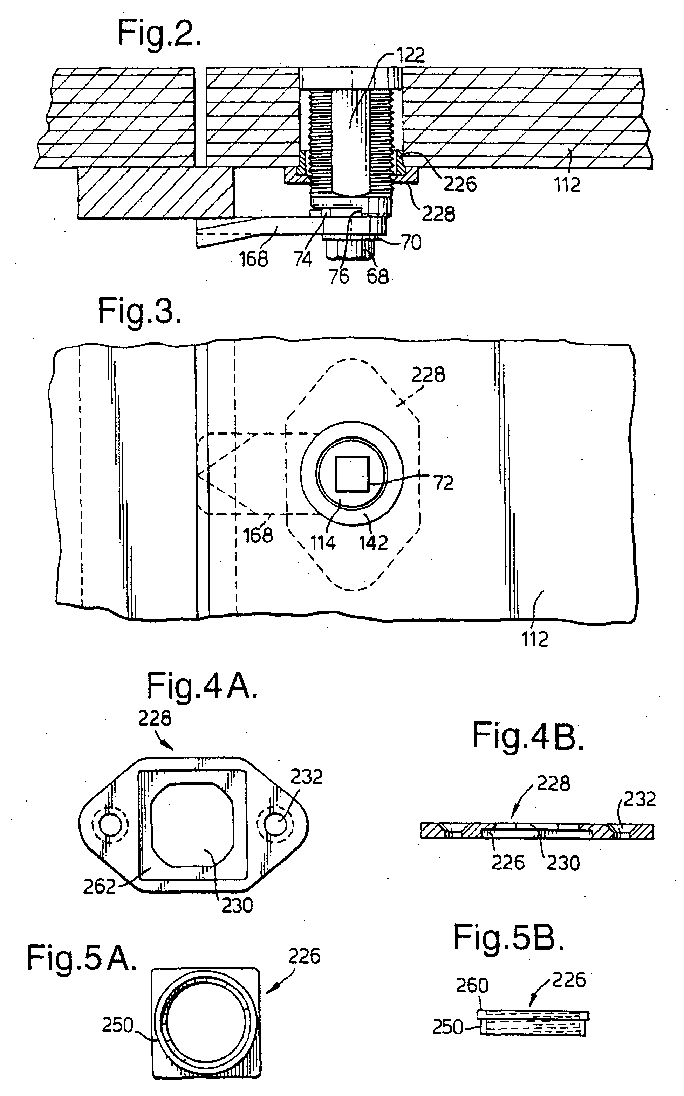

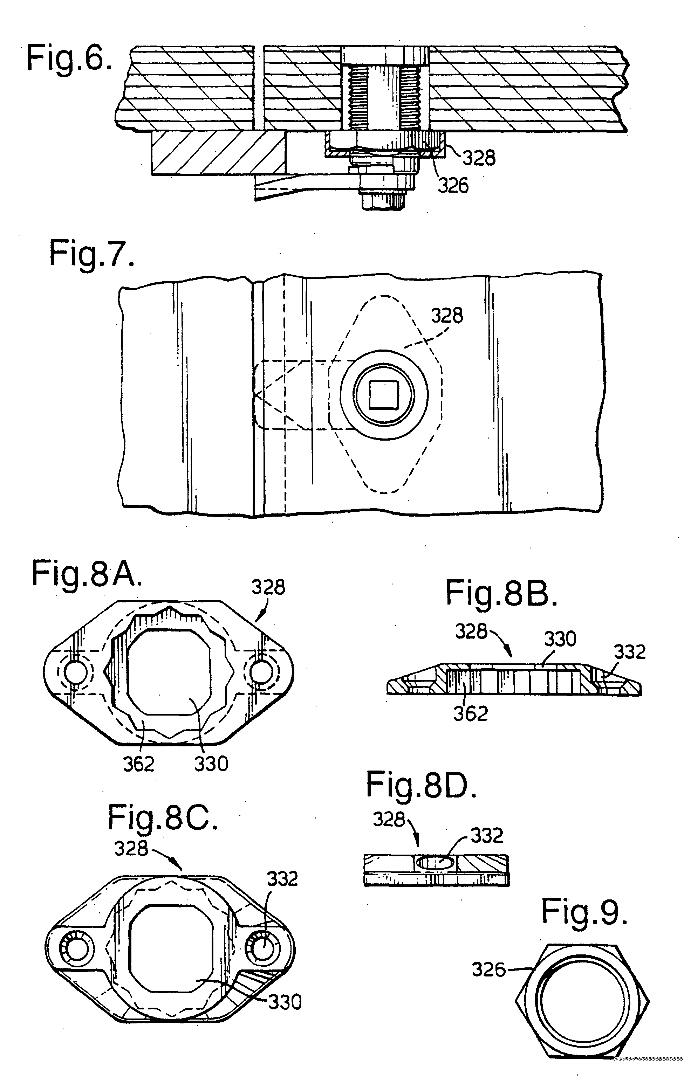

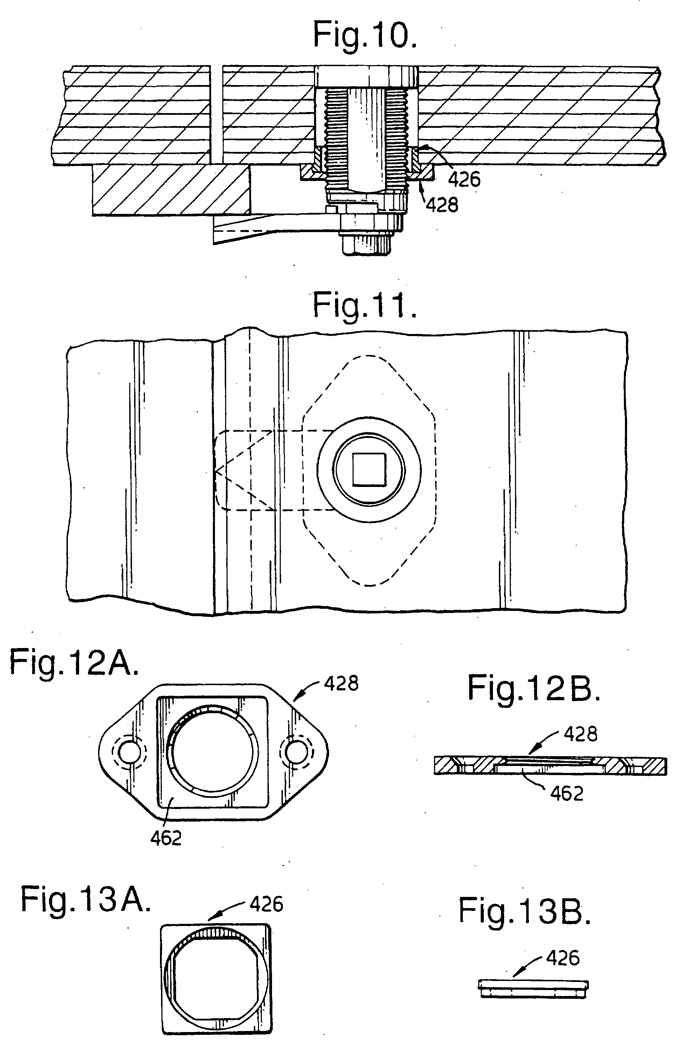

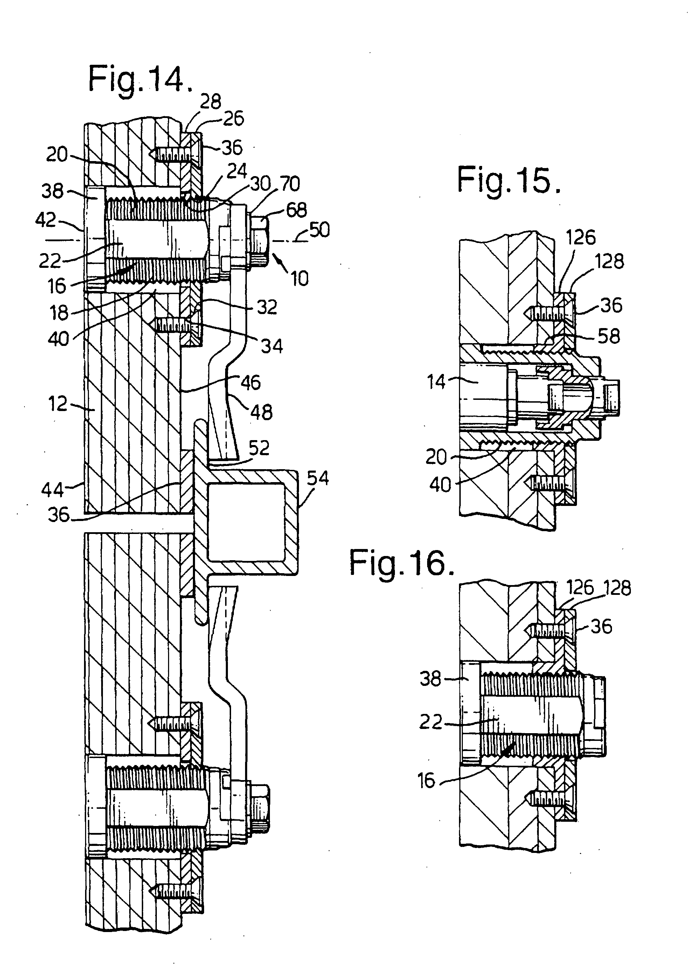

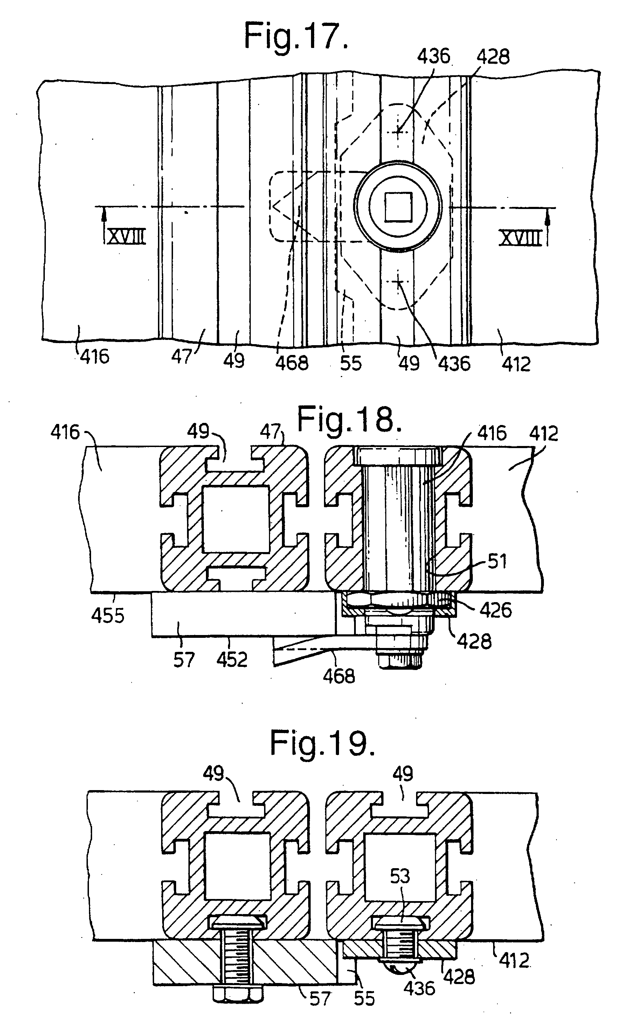

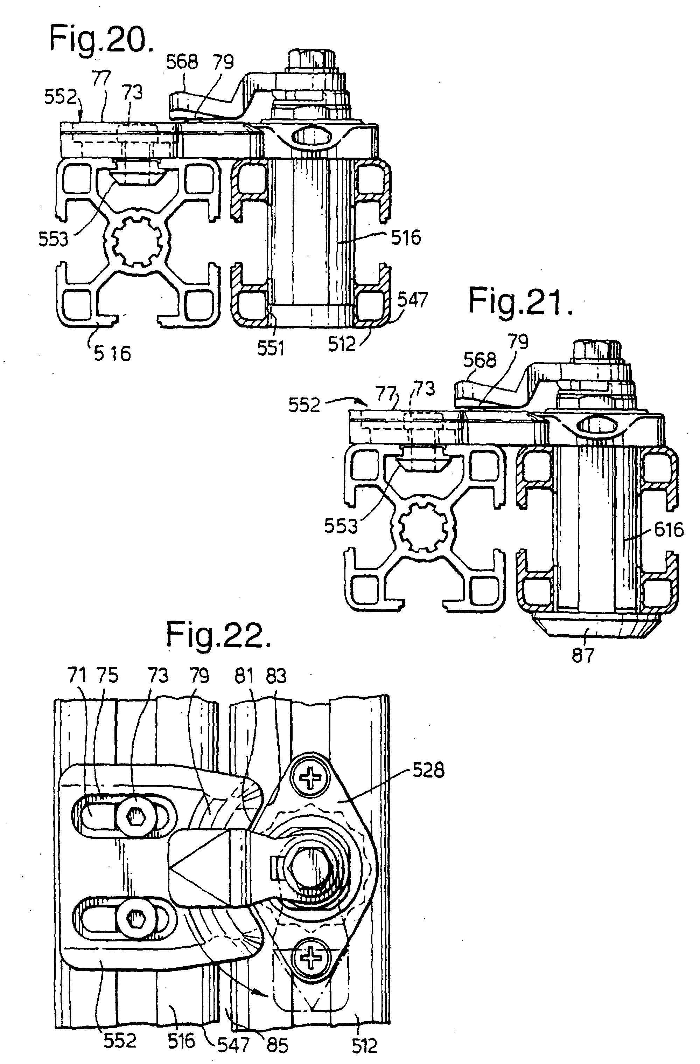

Es zeigt:
**Fig. 1**
   in einer auseinandergezogenen Darstellung eine erste Ausführungsform der erfindungsgemäßen Vorreiberverschlußanordnung;
**Fig. 2**

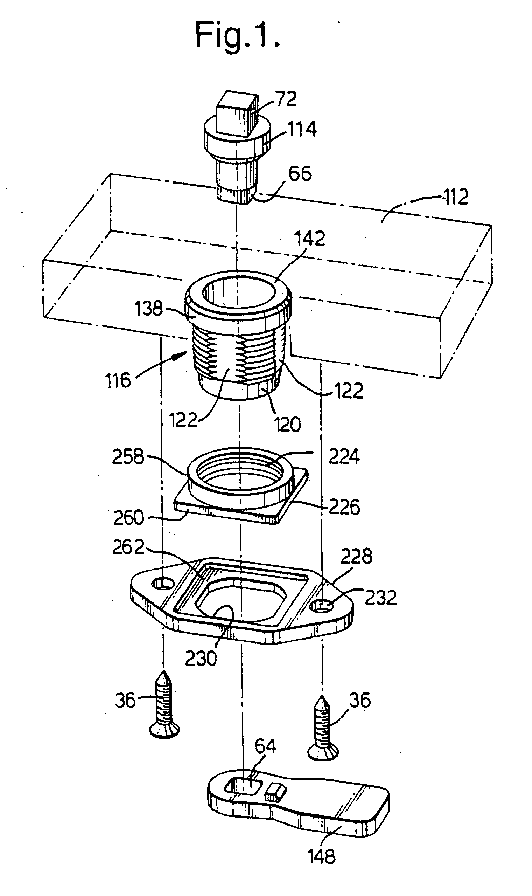

   den in Fig. 1 dargestellten Vorreiberverschluß im eingebauten Zustand in einer Axialschnittdarstellung;
**Fig. 3**
   eine Ansicht von oben auf die Anordnung gemäß Fig. 2;
**Fig. 4A und 4B**
   in einer Draufsicht und in einer Seitenansicht die aufnehmende Platte der in den Fig. 2 und 3 dargestellten Ausführungsform;
**Fig. 5A und 5B**
   in einer Draufsicht und in einer Seitenansicht die aufgenommene Platte gemäß der Ausführungsform gemäß der Fig. 2 und 3;
**Fig. 6**
   in einer ähnlichen Darstellung wie Fig. 2 eine abgewandelte Ausführungsform;
**Fig. 7**
   eine Ansicht von oben auf die Anordnung gemäß Fig. 6;
**Fig. 8A, 8B, 8C und 8D**
   in vier verschiedenen Ansichten die gemäß Fig. 6 und 7 verwendete aufnehmende Platte;
**Fig. 9**
   in einer Draufsicht eine als aufgenommene Platte geeignete Sechskantüberwurfmutter;
**Fig. 10**
   in einer ähnlichen Ansicht wie Fig. 2 zu Erläuterungszwecken eine dem Stand der Technik ähnliche Konstrution;
**Fig. 11**
   eine Ansicht von oben auf die Anordnung gemäß Fig. 10;
**Fig. 12A und 12B**
   in einer Draufsicht und in einer Seitenansicht die aufnehmende Platte gemäß den Fig. 10 und 11;
**Fig. 13A und 13B**
   in einer Draufsicht und in einer Seitenansicht die aufgenommene Platte gemäß Fig. 10 und 11;
**Fig. 14**
   in einer Querschnittsdarstellung ein Anwendungsfall für einen Vorreiberverschluß. ähnlich der eingangs genannten Art;
**Fig. 15**
   zu Erläuterungszwecken einen axial geschnittenen Vorreiberverschluß, jedoch ohne Zunge;
**Fig. 16**
   eine Seitenansicht auf die Anordnung gemäß Fig. 15;
**Fig. 17**
   eine Draufsicht auf eine Ausführungform für Nutenprofile;
**Fig. 18**
   eine Schnittansicht entlang der Schnittlinie XVIII-XVIII der Fig. 17; und
**Fig. 19**
   eine Schnittansicht entlang der Schnittlinie XIX-XIX der Fig. 17; und
**Fig. 20**
   in einer ähnlichen Darstellung wie Fig. 18 eine weitere Ausführungsform der Erfindung;
**Fig. 21**
   in einer ähnlichen Darstellung wie Fig. 18 eine noch andere Ausführungsform der Erfindung;
**Fig. 22**
   eine Ansicht von hinten auf die Ausführungsformen gemäß Fig. 20 bzw. 21;
**Fig. 23A bis 25E**
   verschiedene Ansichten einer Anschlagplatte, die gemäß den Ausführungsformen der Fig. 20, 21 und 22 benutzt wird.

### BESTE WEGE DER AUSFÜHRUNG DER ERFINDUNG

Zunächst sei auf Fig. 14 eingegangen, die einen Vorreiberverschluß 10 für eine dickwandige Tür oder Klappe 12 erkennen läßt, mit einem die Betätigungswelle 14 (siehe Fig. 15) drehbar lagerndem Gehäuse 16, dessen Umfang 18 ein Gewinde 20 und zumindest eine, meist aber vier um 90° zueinander versetzt axial verlaufende Abflachungen 22 aufweist. Eine mit einer Gewindebohrung 24 versehene Befestigungsplatte 26 ist auf das Gewinde 20 des Umfangs 18 des Gehäuses 16 aufschraubbar, und eine zweite Platte 28 mit einem nicht-runden, z. B. an die Abflachung 22 angepaßten, sehnenartig eingeschnürten Durchbruch 30 ist auf das Gehäuse 16 aufsteckbar. Infolge der nicht runden Form läßt sich die Platte 28 bezüglich des Gehäuses 16 nicht verdrehen, wohl aber axial verschieben.

Beide Platten 26, 28 besitzen in bestimmter Drehstellung zueinander fluchtende Bohrungen 32, 34, durch die Befestigungsschrauben, beispielsweise in Form von Holzschrauben 36 hindurchgesteckt und anschließend z. B. in das Material der dickwandigen Tür 12 eingeschraubt werden können.

Das Gehäuse besitzt hier einen über den Querschnitt des Umfangsgewindes 18 vorspringenden Bund oder Schlüsselfang 38, und das Türblatt 12 besitzt einen Runddurchbruch 40 mit einem solchen Durchmesser, daß das Gehäuse mit seinem Bund 38 passend eingeschoben werden kann, und zwar so weit, bis die Stirnfläche 42 des Gehäuses 16 bzw. des Bundes 38 mit der Außenfläche 44 des Türblatts oder der Klappe 12 fluchtet. Anschließend kann man dann die Platte 28 auf das Gehäuse 16 aufschieben, bis die Platte 28 an der Innenfläche 46 des Türblatts anliegt. Die Platte 28 ermöglicht eine Drehsicherung des Gehäuses 16 bezüglich der runden Türöffnung 40, hält das Gehäuse 16 jedoch noch nicht in axialer Richtung. Um dies zu erreichen, dient die aufschraubbare Platte 26. Sie wird bis zu der in Fig. 14 erkennbaren Stellung aufgeschraubt und dann in eine solche Stellung gebracht, daß der für die Befestigungsschraube 36 dienende Durchbruch 32 zu einer entsprechenden Bohrung 34 in der anderen Platte 28 fluchtet, woraufhin die bereits erwähnten Befestigungsschrauben 36 hindurchgesteckt und in das Türblatt 12 eingeschraubt werden können, wodurch die beiden Platten gemeinsam festgehalten werden, und mit der Platte 26 nunmehr auch die axiale Sicherung des Gehäuses 16 ermöglicht ist. Mit der hier nicht näher dargestellten Antriebswelle läßt sich eine Zunge 48 um die Achse der Antriebswelle 50 verschwenken, bei welcher Schwenkbewegung die Zunge 48 beispielsweise auf die Auflauffläche 52 beispielsweise eines Rahmens oder Schrankprofils 55 aufläuft und dadurch die Tür oder Klappe 12 mit ihrer inneren Fläche 46 und einem beispielsweise dazwischen gelegten Dichtungsstrang 56 gegen das Profil 54 drückt und dadurch die Tür oder Klappe 12 in geschlossener Stellung hält. Eine in Fig. 14 dargestellte weitere Tür oder Klappe ist spiegelsymmetrisch aufgebaut und angeordnet.

Nachteilig bei der in Fig. 14 dargestellten Konstruktion ist die Tatsache, daß das Gewinde der Platte 26 relativ schmal ist und sich auf die Dicke der Platte beschränken muß. Dadurch ist die Festigkeit der Anordnung begrenzt. Ein weiterer Nachteil: Sowohl die Platte 28 wie die Platte 26 haben jeweils zwei um 180° zueinander um die Vorreiberwellenachse herum versetzte Löcher. Diese fluchten nur dann, wenn die beiden Platten in bestimmter Stellung zueinander ausgerichtet sind. Das bedeutet, daß die Platte 26 bzw. Platte 28 um jeweils 180° gedreht werden muß, um eine neue Fluchtposition zu erreichen. Damit kann höchstens auf einen halben Gewindegang genau die Ebene 42 zur Ebene 44 ausgerichtet werden. Besitzt das Vorreibergehäuse keine vier um 90° versetzte Abflachungen, sondern z. B. nur zwei um 180° versetzte oder nur eine Abflachung, läßt sich die Anordnung dann auch nicht von "rechts" auf "links" umstellen, weil dazu eine Verdrehung des Gehäuses um 90° nötig ist.

Durch im folgenden zu beschreibende weitere Merkmale und Ausführungsformen gelingt es, diese Nachteile zu umgehen. So stellt die Ausführungsform gemäß Fig. 15 und 16 bereits eine Verbesserung insofern dar, als dort die mit Gewindebohrung versehene Platte 126 einen Ringansatz 58 aufweist, der die Gesamtlänge des Gewindes der Gewindeplatte 126 um beispielsweise das Dreifache vergrößert. Da der Ansatz so geformt ist, daß er in den von dem Türblatt 12 gebildeten Durchbruchraum 40 aufnehmbar ist, stört er die Raumverhältnisse nicht und erlaubt auch, die aufschiebbare Platte 128 zu verwenden, die ein ungewolltes Verdrehen des Gehäuses 16 unterbindet, wenn, wie bereits geschildert, die beiden Platten 126, 128 mittels Befestigungsschrauben 36 festgelegt werden. Der Nachteil, daß zumindest eine halbe Umdrehung notwendig ist, um die beiden Platten 126, 128 bezüglich ihrer Durchbrüche zueinander fluchten zu lassen, ist hier aber weiterhin gegeben.

Fig. 1 zeigt eine Ausführungsform, bei der auch in dieser Hinsicht eine Verbesserung erreicht ist. Dort ist ein Gehäuse 116 in einem Türblatt 112 angeordnet, mit einem wiederum genau in die Bohrung der Tür 112 passenden Bund 138, mit Umfangsgewinde 120 und Abflachungen 122. Auf das Umfangsgewinde 120 läßt sich nun die Platte 226 mit ihrem Innengewinde 224 aufschrauben, wobei auch hier das Innengewinde durch einen Ansatz 258 verlängert ist, wobei der Ansatz wiederum in die von dem Türblatt 112 gebildete Bohrung einbringbar ist. Die Platte 224 besitzt in ihrer Basis 260 keine Bohrungen mehr, wie es noch bei der Ausführungsform gemäß Fig. 15 der Fall war, statt dessen hat die Basis 260 die Form eines Quadrats, welche Basisplatte 260 in einer Vertiefung 262 aufnehmbar ist, die von der auf das Gehäuse 116 aufschiebbaren Platte 228 gebildet wird. Erst diese Platte 228 besitzt dann Durchbrüche 232, um die Platte 228 mittels Schrauben 36 am Türblatt 112 in der bereits geschilderten Weise festzulegen. Der Vorteil der in Fig. 1 dargestellten Ausführungsform ist der, daß das Bauteil 226 bezüglich des Bauteils 228 jeweils im Winkel von 90° versetzt arretiert werden kann. Bei der Ausführungsform gemäß Fig. 15 oder 16 war noch eine Drehung um 180° erforderlich. Es wird somit eine Verdopplung der Einstellgenauigkeit erreicht. Die 90°-Versetzbarkeit erlaubt auch die Umstellung von "rechts" auf "links".

Arretiert wird die Anordnung gemäß Fig. 1 dadurch, daß beispielsweise das Gehäuse 116 mit eingelegtem Betätigungsdorn 114 und aufgesetzter Vorreiberzunge 148 von hinten in die Bohrung im Türblatt 112 eingeschoben wird, wobei die Platte 226 auf das Gewinde 120 des Gehäuses 116 so weit aufgeschraubt wird, daß die Fläche 142 des Bundes 138 genau mit der Vorderfront des Türblatts oder der Klappe 112 fluchtet. Anschließend wird auf das innere Gehäuseende die Platte 228 aufgeschoben und zwar so, daß die Basis 260 der Platte 226 in die Einsenkung 162 passend aufgenommen ist. Dabei wird die Gesamtanordnung so gedreht, daß der Gehäuseumfang des Gehäuses 116 mit seinen Abflachungen 122 durch die Öffnung 230 hindurchgeführt werden kann, wobei diese Öffnung 230 eng an die Umfangsform des Gehäuses 116 anpassbar ist. Die Zunge 148 gemäß Fig. 1 ist nicht verkröpft, im Gegensatz zu der Darstellung von Fig. 14, wobei die Verkröpfung u.U. das Aufschieben der Platten 226, 228 bei bereits montierter Zunge 148 erleichtert. Sollte dieses Aufschieben Probleme bereiten, könnte die Zunge 148 zunächst weggelassen und erst anschließend montiert werden.

Die Zunge 148 wird dabei mit ihrer Vierkantöffnung 64 auf den Vierkant 66 des Dorns 114 aufgesteckt und mittels einer hier nicht dargestellten Schraube 70 unter z. B. der Zwischenlage einer Beilagscheibe 68, siehe Fig. 14, festgelegt.

Um den dann so fertiggestellten Vorreiberverschluß zu betätigen, dient beispielsweise ein Steckschlüssel, der den Dornvierkant 72 gemäß Fig. 1 in Eingriff nimmt.

Die Fig. 2 zeigt den in Fig. 1 dargestellten Vorreiberverschluß im zusammengebauten und eingebauten Zustand, wobei hier erkennbar ist, daß die Drehbewegung der Zunge 268 durch eine Anschlagnase 72 der Zunge und Anschlagflächen 74, 76 des Gehäuses auf einen Drehwinkel von z. B. 90° begrenzt wird, um so dem Benutzer die beiden Endstellungen der Zunge, geschlossen wie in Fig. 3 darstellt, oder offen, vorzugeben. Dreht man das Gehäuse bezüglich der Anschlagfläche um 90° (bzw. 270°), wird aus einem "rechten" ein "linker" Verschluß, siehe die beiden in Fig. 14 dargestellten Verschlüsse, von denen der obere in Uhrzeigerrichtung schließt, der untere in Gegenuhrzeigerrichtung.

Die Fig. 4A, 4B, die eine Darstellung des Bauteils 228 liefern, lassen auch erkennen, daß die Durchbrüche 232 für die Befestigungsschrauben als Senkkopfdurchbrüche ausgestaltet sein können.

Fig. 6 und 7 zeigen eine Ausführungsform, bei der die mit Gewinde versehene Platte von einer normalen Sechskantüberwurfmutter 326 gebildet wird, die nochmals in Fig. 9 dargestellt ist. Hier ist die Aufbauhöhe etwas größer als bei Fig. 2, jedoch erlaubt die Sechskantform der Mutter 326 bereits eine verdreifachte Verstellgenauigkeit von 60° (bei Fig. 2 waren es 90° gewesen).

Gestaltet man die die Mutter 326 aufnehmende Platte gemäß den Fig. 8A bis 8D, also mit einer Einsenkung 362, die insgesamt 12 Ecken aufweist, die die 6 Ecken der Mutter 326 jeweils um 30° versetzt aufnehmen können, ergibt sich eine noch größere, versechsfachte Einstellgenauigkeit von jeweils 30°.

Die Öffnung 330 zurAufnahme des Gehäuseumfanges ist ähnlich gestaltet wie bei der Ausführungsform gemäß Fig. 4A. Auch hier sind für die Befestigungsschrauben wieder Bohrungen, vorzugsweise Senkbohrungen 332 vorgesehen.

Die in den Fig. 10 bis 13 dargestellte Konstruktion ähnelt dem Stand der Technik. Bei ihr ist die aufschraubbare Platte 428 diejenige, die die aufsteckbare Platte 426 in eine Einsenkung 462 aufnimmt. Die Konstruktion ist ungünstig, weil hier die Länge des Gewindes klein und die Montage umständlich ist.

Fig. 17 zeigt eine Draufsicht auf eine Ausführungsform für Nutenprofile. Hier besteht, siehe auch die Fig. 18, eine Schnittansicht entlang der Linie XVIII-XVIII der Fig. 17, die Tür oder Klappe 412 wie auch das zugehörige Gehäuse oder Rahmen 416 aus im Querschnitt im wesentlichen rechteckigen oder quadratischen Profilen 47, die an ihren vier Seiten jeweils hinterschnittene Nuten 49 aufweisen. Bei den Profilen handelt es sich um Meterware, in die sich mittels eines geeigneten Werkzeuges eine Querbohrung 51 einbringen läßt, die von dem Profil ausreichend Material beläßt, um deren Stabilität nicht zu beeinträchtigen. Diese Bohrung oder Durchbruch 51 kann dann ein Gehäuse 416 in der bereits beschriebenen Weise aufnehmen. Auch hier besitzt der Umfang des Gehäuses 416 ein Gewinde, auf dessen Ende eine Befestigungsplatte 426 aufschraubbar und mittels einer zweiten Platte 428 auf der anliegenden Oberfläche des Profils festlegbar ist, wobei gleichzeitig das Gehäuse 416 durch diese Platte 428 gegen Verdrehung gesichert wird, ähnlich wie es beispielsweise in den Fig. 1 bzw. 2 bereits erläutert worden ist. Um die Platte 428 ihrerseits festzulegen, dienen hier Schrauben 436, die entweder in separat geschnittene Gewindebohrungen eingeschraubt sind, oder, falls wie beschrieben diese hinterschnittene Nuten vorhanden sind, in diese Nut Nutensteine 53 angeordnet werden, in die die Schrauben 436 eingeschraubt werden können.

Es ergeben sich besonders stabile Verhältnisse, wenn die Achse des Durchbruches 51 für das Gehäuse 416 und die Längsachse des Profils sich senkrecht schneiden. In diesem Falle liegen die Achsen der Durchbrüche für die Schrauben 436 sowie die Achse des Durchbruches für das Gehäuse 416 auf einer Linie, nämlich der Mittellinie der zugehörigen Nut 49.

Diese Konstruktion mit Profilen mit hinterschnittenen Nuten ist besonders vielseitig einsetzbar und erlaubt beispielsweise auch die Befestigung von Anschlagleisten 57 an einem Profil 47 eines Gehäuses 416, um das Profil einer zugehörigen Tür oder Klappe 412 genau auszurichten und gleichzeitig für einen Vorreiber 468 eine Hintergrifffläche 452 zu bilden. Um die Platte 428 aufzunehmen, kann diese Anschlagleiste 57 mit einem Einschnitt 55 versehen sein, wie in Fig. 17 gestrichelt (als verdeckte Linie) und in Fig. 19, eine Schnittansicht entlang der Linie XIX-XIX der Fig. 17, dargestellt ist.

Die Leiste 57 ist hier ebenfalls mit Schrauben befestigt, die durch Nutensteine gehalten werden.

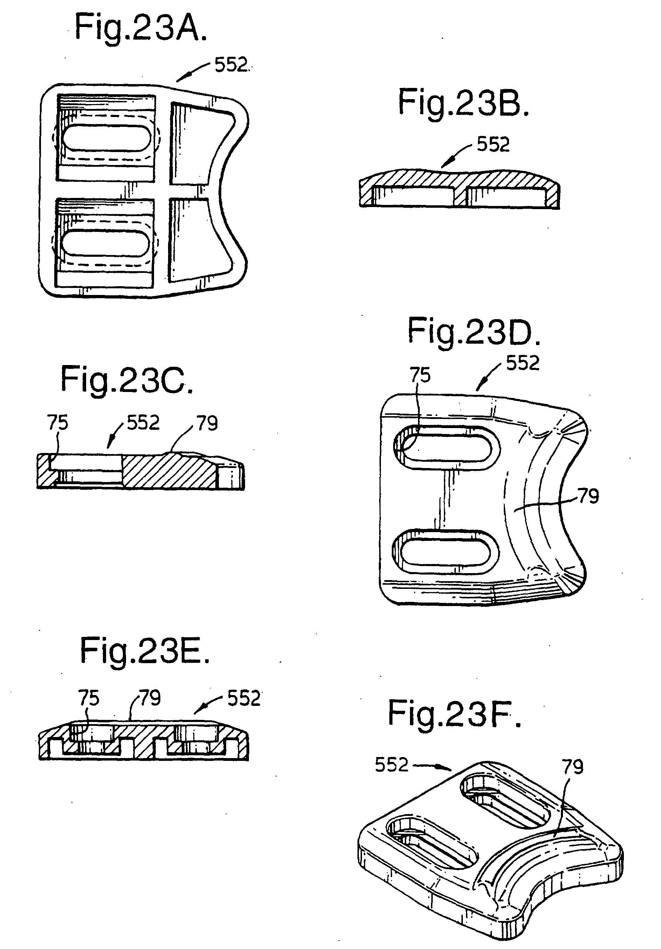

Fig. 20 zeigt in einer Darstellung ähnlich der Fig. 18 eine Weiterentwicklung der in Fig. 18 dargestellten Ausführungsform. Anstelle der Leiste 452, wie sie in Fig. 18 dargestellt ist, ist hier für jeden Verschluß eine Anschlagplatte 552 vorgesehen; die in Fig. 22 in Draufsicht zu erkennen ist und in Fig. 23A bis 23E in verschiedenen Ansichten nochmals dargestellt ist.

Diese Anschlagplatte erlaubt es, eine besonders genaue Anpassung an die Halteplatte 528 vorzunehmen und dadurch eine besonders hohe Stabilität zu erlangen. Durch Verkröpfung der Zunge 568 kann zudem die Dicke der Anschlagplatte 552 reduziert werden. Desweiteren sei auf die Möglichkeit hingewiesen, die Anschlagplatte 552 senkrecht zur Nuterstreckung verschieblich zu machen, indem Langlöcher 71 vorgesehen sind, durch die mit Nutensteinen versehene Schraubbolzen 73 hindurchgeführt sind, wobei der Kopf des Schraubbolzens 73 in einer entsprechenden Einsenkung 75 des Langlochs 71 soweit versenkt werden kann, daß er über die Hintergriffebene 77 der Platte 552 nicht mehr vorspringt. Im Bereich der Auflauffläche 73 für den Vorreiber 568 ist zweckmäßigerweise ein Wulst 79 vorgesehen, der über die Ebene 77 vorspringt und ermöglicht, daß beim Übergleiten der Vorreiberzunge 568 eine evtl. Lackierung des Teils 552 nicht flächig beschädigt wird, sondern nur linienförmig. Der Wulst 79 ist günstigerweise in Form eines Teilkreises angeordnet, wobei der Mittelpunkt des Teilkreises annähernd in der Achse des Vorreibers liegen sollte, wozu ggf. eine entsprechende Einstellung des Abstandes zwischen dem Vorreiberverschluß bzw. dessen Halte- oder Befestigungsplatte 528 und der Anschlagplatte 552 durch die Langlöcher 71 beiträgt. Wie die Fig. 22 außerdem erkennen läßt, ist die Form der Platte 552 derart an die über die Überwurfmutter 426 übergestülpte Halteplatte 528 angepaßt, daß der Abstand zwischen den aneinander stoßenden Rändern 81 bzw. 83 der Anschlagplatte 552 einerseits und der Halteplatte 528 andererseits beispielsweise etwa 1 mm oder weniger beträgt.

Die dargestellte einander umgreifende bzw. "verzahnende" Form der beiden Teile ergibt günstigerweise auch eine Sicherung gegen Verschiebung in Richtung der Türoder Klappenkante 85, was dieser Ausführungsform eine besonders hohe Stabilität gibt und die Einsatzmöglichkeiten vervielfacht.

Fig. 21 zeigt, daß das System der speziellen Vorreiberbefestigung in einem Rundloch auch dann funktioniert, wenn das Gehäuse einen Kopf oder Flansch 87 hat. Zur Montage muß dann allerdings der Vorreiber 568 zunächst abgenommen werden, um das Gehäuse 616 in die Bohrung 551 im Profil 547 mit dem Hinterende einführen zu können. Bei fehlendem Kopf oder Flansch, siehe Fig. 20, kann das Gehäuse 516 dagegen von vorn eingeführt werden und die Zunge 568 stört nicht.

### GEWERBLICHE AUSWERTBARKEIT

Die Erfindung ist beispielsweise im Schaltschrankbau gewerblich auswertbar.

## Patentansprüche

1. Vorreiberverschluß (10) für dickwandige Türen (12), Klappen oder dgl.,. umfassend ein die Betätigungswelle (14) des Vorreibers drehbar lagerndes Gehäuse (16), dessen Umfang (18) ein Gewinde (20) sowie axial verlaufende Abflachungen (22), Rücksprünge oder dgl. aufweist und auf das eine mit Gewindebohrung (24) für das Umfangsgewinde des Gehäuses versehene Befestigungsplatte (26,28) aufschraubbar ist, die zusammen mit einer weiteren, einen nicht-runden Durchbruch (30) aufweisenden und auf das Gehäuse (16) drehstarr aufschiebbaren Platte (28, 26) mittels Schrauben, wie Holzschrauben oder dgl. (36) auf der Rückseite (46) der Tür, Klappe oder dgl. befestigbar ist, **dadurch gekennzeichnet, daß** die aufschiebbare Platte (238, 338) eine Vertiefung bildet, in der die aufschraubbare Platte (226, 326) drehfest aufnehmbar ist.

2. Vorreiberverschluß (10) für Nutenprofilrahmen aufweisende Türen (12), Klappen oder dgl., umfassend ein die Betätigungswelle (14) des Vorreibers drehbar lagerndes Gehäuse (16), dessen Umfang (18) ein Gewinde (20) sowie axial verlaufende Abflachungen (22), Rücksprünge oder dgl. aufweist und auf das eine mit Gewindebohrung (24) für das Umfangsgewinde des Gehäuses versehene Befestigungsplatte (26, 28) aufschraubbar ist, die zusammen mit einer weiteren, einen nicht-runden Durchbruch (30) aufweisenden und auf das Gehäuse (16) drehstarr aufschiebbaren Platte (28, 26) mittels Schrauben (36) auf der Rückseite (46) der Tür, Klappe oder dgl. befestigbar ist, **dadurch gekennzeichnet, daß** das Vorreibergehäuse (416, 516, 616) in einer im Profil des Nutenprofilrahmens angeordneten Querbohrung (51, 551) aufnehmbar ist, daß die aufschiebbare Platte (238, 338) eine Vertiefung bildet, in der die aufschraubbare Platte (226, 326) drehfest aufnehmbar ist, und daß die Befestigungsschrauben (436) für die aufschiebbare Platte (428, 528) von in den Nutenprofilrahmen aufnehmbaren Nutensteinen (53, 553) gehalten sind.

3. Vorreiberverschluß nach Anspruch 1 oder 2, wobei im Bereich der Aufnahme für einen Betätigungsschlüssel das Gehäuse (16) einen über den Querschnitt des Außengewindes (20) vorspringenden Bund oder Schlüsselfang (38) bildet, **dadurch gekennzeichnet, daß** die aufnehmbare Platte (226, 426) einen ersten Axialabschnitt (258, 458) bildet, der eine runde Außenkontur (260) aufweist, mit einem Durchmesser annähernd gleich dem Bundaußendurchmesser, und einen zweiten aufnehmbaren Querschnitt (258), mit unrunder, wie quadratischer Außenkontur, und einem maximalen Durchmesser, wie Querverbindung zwischen zwei sich gegenüberliegenden Ecken des Quadrats, der größer ist als der Bundaußendurchmesser.

4. Vorreiberverschluß nach Anspruch 1, 2 oder 3, **dadurch gekennzeichnet, daß** die aufgenommene Platte die Form einer üblichen sechskantigen Überwurfmutter (326) und die aufnehmende Platte eine Einsenkung (362) aufweist, die ein Sechs- oder Zwölfeck bildet.

5. Vorreiberverschluß nach einem der Ansprüche 1 bis 4, **dadurch gekennzeichnet, daß** die aufnehmende Platte ein Spritzgußteil ist.

6. Vorreiberverschluß nach einem der Ansprüche 1 bis 4, **dadurch gekennzeichnet, daß** die aufnehmende Platte ein Stanzteil ist.

7. Vorreiberverschluß nach einem der Ansprüche 1 bis 6, **dadurch gekennzeichnet, daß** die mit Gewindebohrung versehene Platte (126) einen Ringansatz (58) aufweist, der die Achsiallänge der Gewindebohrung vergrößert.

8. Vorreiberverschluß nach Anspruch 7, **dadurch gekennzeichnet, daß** der Ansatz (58) in den vom Türblatt (12) oder dgl. gebildeten Durchbruch aufnehmbar ist.

9. Vorreiberverschluß nach Anspruch 8, **dadurch gekennzeichnet, daß** der Ansatz (58) einen Außendurchmesser aufweist, der an den des Bundes (18) angepaßt ist.

10. Vorreiberverschluß nach Anspruch 9, **dadurch gekennzeichnet, daß** die Durchbruchachse und die Profilachse sich senkrecht schneiden.

11. Vorreiberverschluß nach einem der Ansprüche 2 bis 10, **dadurch gekennzeichnet, daß** die Vorreiberzunge (568) eine zur Auflagefläche (77) gerichtete Verkröpfung aufweist.

12. Vorreiberverschluß nach einem der Ansprüche 1 bis 11, **dadurch gekennzeichnet, daß** die Vorreiberzunge (568) auf einer Anschlagplatte (552) aufgleitet, die auf dem Rahmen (516) befestigt ist, an der die Tür, Klappe (512) oder dgl. angelenkt oder angebracht ist.

13. Vorreiberverschluß nach Anspruch 12, **dadurch gekennzeichnet, daß** die Anschlagplatte (552) eine zur Befestigungsplatte (528) gerichtete Außenkontur (81) aufweist, die an die Außenkontur (83) der Befestigungsplatte (528) für den Vorreiberverschluß angepaßt ist, vorzugsweise ineinandergreifend.

14. Vorreiberverschluß nach einem der Ansprüche 12 oder 13, **dadurch gekennzeichnet, daß** die Anschlagplatte (552) im Bereich der Auflauffläche für die Vorreiberzunge (568) eine über die Ebene (77) vorspringende Wulst (79) aufweist.

15. Vorreiberverschluß nach Anspruch 14, **dadurch gekennzeichnet, daß** die Wulst (79) einen Teilkreis um die von dem Vorreiberverschluß gebildete Achse darstellt.

16. Vorreiberverschluß nach einem der Ansprüche 12 bis 15, **dadurch gekennzeichnet, daß** die Anschlagplatte (552) zwei Langlöcher (71) zur Aufnahme von Befestigungsschrauben (73) aufweist, die ihrerseits in von den Profilen (547) aufgenommenen Nutsteinen (553) eingeschraubt sind.

17. Vorreiberverschluß nach Anspruch 16, **dadurch gekennzeichnet, daß** die Langlöcher eine Einsenkung (75) für den Kopf der Befestigungschraube (73) bilden.

18. Tür (12) mit einem Vorreiberverschluß (10) nach zumindest einem der Ansprüche 2 bis 17, welche Tür wie auch jeweils zugehörige Gehäuse oder Rahmen Nutenprofile aufweisen, die im Querschnitt im wesentlichen rechteckig oder quadratisch sind und an ihren vier Seiten jeweils hinterschnittene Nuten aufweisen, **dadurch gekennzeichnet, daß** das Gehäuse (416, 516, 616) des Vorreiberverschlusses in einer im Nutenprofil angeordneten Querbohrung (51, 551) aufgenommen ist, daß die aufschiebbare Platte (238, 338) eine Vertiefung bildet, in der die aufschraubbare Platte (226, 326) drehfest aufnehmbar ist, und daß die Befestigungsschrauben (436) für die aufschiebbare Platte (428, 528) von in der hinterschnittenen Nut (49) angeordneten Nutensteinen (53, 553) gehalten sind.

19. Klappe mit einem Vorreiberverschluß (10) nach zumindest einem der Ansprüche 2 bis 17, welche Klappe wie auch jeweils zugehörige Gehäuse oder Rahmen Nutenprofile aufweisen, die im Querschnitt im wesentlichen rechteckig oder quadratisch sind und an ihren vier Seiten jeweils hinterschnittene Nuten aufweisen, **dadurch gekennzeichnet, daß** das Gehäuse (416, 516, 616) des Vorreiberverschlusses in einer im Nutenprofil angeordneten Querbohrung (51, 551) aufgenommen ist, daß die aufschiebbare Platte (238, 338) eine Vertiefung bildet, in der die aufschraubbare Platte (226, 326) drehfest aufnehmbar ist, und daß die Befestigungsschrauben (436) für die aufschiebbare Platte (428, 528) von in der hinterschnittenen Nut (49) angeordneten Nutensteinen (53, 553) gehalten sind.

20. Verwendung des Vorreiberverschlusses (10) nach zumindest einem der Ansprüche 1, 3 bis 10, 12 bis 17 für dickwandige Türen (12), Klappen oder dgl.

21. Verwendung des Vorreiberverschlusses (10) nach zumindest einem der Ansprüche 2 bis 17 für Türen (12), Klappen oder dgl., welche Türen, Klappen oder dgl. wie auch jeweils zugehörige Gehäuse oder Rahmen Nutenprofile aufweisen, die im Querschnitt im wesentlichen rechteckig oder quadratisch sind und an ihren vier Seiten jeweils hinterschnittene Nuten aufweisen.

## Claims

1. Sash fastener lock (10) for thick-walled doors (12), shutters or the like, comprising a housing (16) which rotatably mounts the actuation shaft (14) of the sash fastener and of which the periphery (18) comprises a thread (20) and axially extending flattened surfaces (22), recesses or the like and on to which housing it is possible to screw an attachment plate (26, 28) which is provided with a threaded bore (24) for the circumferential thread of the housing and which together with a further plate (28, 26), which comprises a non-circular opening (30) and can be slipped onto the housing (16) in a non-rotational manner, can be attached to the rear side (46) of the door, shutter or the like by means of screws, such as wood screws or the like (36), **characterised in that** the slip-on plate (238, 338) forms a recess, in which the screw-on plate (226, 326) can be received in a non-rotational manner.

2. Sash fastener lock (10) for doors (12), shutters or the like which comprise groove profile frames, comprising a housing (16) which rotatably mounts the actuation shaft (14) of the sash fastener and of which the periphery (18) comprises a thread (20) and axially extending flattened surfaces (22), recesses or the like and on to which housing it is possible to screw an attachment plate (26, 28) which is provided with a threaded bore (24) for the circumferential thread of the housing and which together with a further plate (28, 26), which comprises a non-circular opening (30) and can be slipped onto the housing (16) in a non-rotational manner, can be attached to the rear side (46) of the door, shutter or the like by means of screws (36), **characterised in that** the sash fastener housing (416, 516, 616) can be received in a transverse bore (51, 551) which is disposed in the profile of the groove profile frame, that the slip-on plate (238, 338) forms a recess, in which the screw-on plate (226, 326) can be received in a non-rotational manner, and that the attachment screws (436) for the slip-on plate (428, 528) are held by tenon blocks (53, 553) which can be received in the groove profile frames.

3. Sash fastener lock as claimed in Claim 1 or 2, wherein in the region where an actuating key is received, the housing (16) forms a collar or key socket (38) which protrudes beyond the cross-section of the outer thread (20), **characterised in that** the receivable plate (226, 426) forms a first axial portion (258, 458) which comprises a circular outer contour (260), having a diameter approximately equal to the outer diameter of the collar, and a second receivable cross-section (258), having a non-circular, approximately square outer contour, and a maximum diameter, and a transverse connection between two mutually opposite-lying corners of the square which is larger than the outer diameter of the collar.

4. Sash fastener lock as claimed in Claim 1, 2 or 3, **characterised in that** the received plate has the shape of a conventional hexagonal union nut (326) and the receiving plate comprises a hollow (362) which forms a hexagon or dodecagon.

5. Sash fastener lock as claimed in any one of Claims 1 to 4, **characterised in that** the receiving plate is an injection-moulded part.

6. Sash fastener lock as claimed in any one of Claims 1 to 4, **characterised in that** the receiving plate is a punched part.

7. Sash fastener lock as claimed in any one of Claims 1 to 6, **characterised in that** the plate (126) which is provided with a threaded bore comprises an annular projection (58) which increases the axial length of the threaded bore.

8. Sash fastener lock as claimed in Claim 7, **characterised in that** the projection (58) can be received in the opening formed by the door leaf (12) or the like.

9. Sash fastener lock as claimed in Claim 8, **characterised in that** the projection (58) comprises an outer diameter which is adapted to that of the collar (18).

10. Sash fastener lock as claimed in Claim 9, **characterised in that** the axis of the opening and the axis of the profile intersect each other perpendicularly.

11. Sash fastener lock as claimed in any one of Claims 2 to 10, **characterised in that** the sash fastener tongue (568) comprises a shoulder piece which is directed towards the support surface (77).

12. Sash fastener lock as claimed in any one of Claims 1 to 11, **characterised in that** the sash fastener tongue (568) slides on a stop plate (552) which is attached to the frame (516), to which the door, shutter (512) or the like is articulated or attached.

13. Sash fastener lock as claimed in Claim 12, **characterised in that** the stop plate (552) comprises an outer contour (81) which is directed towards the attachment plate (528) and which is adapted to the outer contour (83) of the attachment plate (528) for the sash fastener lock, preferably in such a manner as to interlock.

14. Sash fastener lock as claimed in any one of Claim 12 or 13, **characterised in that** in the region of the run-up surface for the sash fastener tongue (568), the stop plate (552) comprises a bead (79) which projects above the plane (77).

15. Sash fastener lock as claimed in Claim 14, **characterised in that** the bead (79) is a partial circle about the axis formed by the sash fastener lock.

16. Sash fastener lock as claimed in any one of Claims 12 to 15, **characterised in that** the stop plate (552) comprises two elongate holes (71) for the purpose of receiving attachment screws (73) which for their part are screwed into tenon blocks (553) which are received by the profiles (547).

17. Sash fastener lock as claimed in Claim 16, **characterised in that** the elongate holes form a hollow (75) for the head of the attachment screw (73).

18. Door (12) having a sash fastener lock (10) as claimed in at least one of Claims 2 to 17, which door and in each case its associated housing or frame comprise groove profiles which are substantially rectangular or square in cross-section and comprise in each case undercut grooves on their four sides, **characterised in that** the housing (416, 516, 616) of the sash fastener lock is received in a transverse bore (51, 551) which is disposed in the groove profile, that the slip-on plate (238, 338) forms a recess, in which the screw-on plate (226, 326) can be received in a non-rotational manner, and that the attachment screws (436) for the slip-on plate (428, 528) are held by tenon blocks (53, 553) which are disposed in the undercut groove (49).

19. Shutter having a sash fastener lock (10) as claimed in at least one of Claims 2 to 17, which shutter and in each case its associated housing or frame comprise groove profiles which are substantially rectangular or square in cross-section and comprise in each case undercut grooves on their four sides, **characterised in that** the housing (416, 516, 616) of the sash fastener lock is received in a transverse bore (51, 551) which is disposed in the groove profile, that the slip-on plate (238, 338) forms a recess, in which the screw-on plate (226, 326) can be received in a non-rotational manner, and that the attachment screws (436) for the slip-on plate (428, 528) are held by tenon blocks (53, 553) which are disposed in the undercut groove (49).

20. Use of the sash fastener lock (10) as claimed in at least one of Claims 1, 3 to 10, 12 to 17 for thick-walled doors (12), shutters or the like.

21. Use of the sash fastener lock (10) as claimed in at least one of Claims 2 to 17 for doors (12), shutters or the like, which doors, shutters or the like and in each case their associated housings or frames comprise groove profiles which are substantially rectangular or square in cross-section and comprise in each case undercut grooves on their four sides.

## Revendications

1. Serrure à tourniquet (10) pour portes (12) à paroi épaisse, clapets ou analogues, comprenant un bâti (16) logeant l'arbre d'actionnement (14) du tourniquet de manière à pouvoir tourner, dont la périphérie (18) présente un filet (20) ainsi que des parties plates (22), des parties en retrait ou analogues s'étendant axialement, et sur lequel on peut visser une plaque de fixation (26, 28) pourvue d'un trou taraudé (24) pour le filet périphérique du bâti, ladite plaque de fixation pouvant être fixée sur la face arrière (46) de la porte, du clapet ou analogue au moyen de vis, telles que des vis à bois ou analogues (36) avec une autre plaque (28, 26) présentant un autre trou (30) non rond et pouvant être glissée de manière à ne pas tourner sur le bâti (16), **caractérisée en ce que** la plaque (238, 338) pouvant être glissée forme une partie plus profonde, dans laquelle la plaque (226, 326) pouvant être vissée peut être placée sans tourner.

2. Serrure à tourniquet (10) pour portes (12), clapets ou analogues présentant des cadres à profil à rainure, comprenant un bâti (16) logeant l'arbre d'actionnement (14) du tourniquet de manière à pouvoir tourner, dont la périphérie (18) présente un filet (20) ainsi que des parties plates (22), des parties en retrait ou analogues s'étendant axialement, et sur lequel on peut visser une plaque de fixation (26, 28) pourvue d'un trou taraudé (24) pour le filet périphérique du bâti, ladite plaque de fixation pouvant être fixée sur la face arrière (46) de la porte, du clapet ou analogue au moyen de vis, telles que des vis à bois ou analogues (36) avec une autre plaque (28, 26) présentant un autre trou (30) non rond et pouvant être glissée de manière à ne pas tourner sur le bâti (16), **caractérisée en ce que** le bâti (416, 516, 616) du tourniquet peut être placé dans un trou transversal (51, 551) disposé dans le profil du cadre à profil à rainure, **en ce que** la plaque pouvant être glissée (238, 338) forme une partie plus profonde dans laquelle la plaque (226, 326) pouvant être vissée peut être placée sans tourner et **en ce que** les vis de fixation (436) pour la plaque pouvant être glissée (428, 528) sont maintenues par les coulisseaux (53, 553) pouvant être placés dans les cadres à profil à rainure.

3. Serrure à tourniquet selon la revendication 1 ou 2, le bâti (16) présentant, dans la zone de réception d'une clef d'actionnement, un épaulement ou un arrêt de clef (38) en saillie par rapport à la section du filet extérieur (20), **caractérisée en ce que** la plaque pouvant être insérée (226, 426) forme une première section axiale (258, 458), qui présente un contour extérieur rond (260), présentant un diamètre quasiment identique au diamètre extérieur de l'épaulement et une deuxième section (258) de réception, présentant un contour extérieur non rond, tel que carré, et un diamètre maximum comme liaison transversale entre deux coins opposés du carré, qui est supérieur au diamètre extérieur de l'épaulement.

4. Serrure à tourniquet selon la revendication 1, 2, ou 3, **caractérisée en ce que** la plaque insérée présente la forme d'un écrou-raccord hexagonal usuel (326) et la plaque destinée à accueillir présente un renfoncement (362) qui forme un hexagone ou un dodécagone.

5. Serrure à tourniquet selon l'une quelconque des revendications 1 à 4, **caractérisée en ce que** la plaque destinée à accueillir est une pièce moulée par injection.

6. Serrure à tourniquet selon l'une quelconque des revendications 1 à 4, **caractérisée en ce que** la plaque destinée à accueillir est une pièce estampée.

7. Serrure à tourniquet selon l'une quelconque des revendications 1 à 6, **caractérisée en ce que** la plaque (126) pourvue d'un trou taraudé présente un embout annulaire (58) qui agrandit la longueur axiale du trou taraudé.

8. Serrure à tourniquet selon la revendication 7, **caractérisée en ce que** l'embout (58) peut être accueilli dans l'ouverture formée par le battant de porte (12) ou analogue.

9. Serrure à tourniquet selon la revendication 8, **caractérisée en ce que** l'embout (58) présente un diamètre extérieur qui est adapté à celui de l'épaulement (18).

10. Serrure à tourniquet selon la revendication 9, **caractérisée en ce que** l'axe de l'ouverture et l'axe de profil se coupent perpendiculairement.

11. Serrure à tourniquet selon l'une quelconque des revendications 2 à 10, **caractérisée en ce que** la languette (568) du tourniquet présente une partie coudée dirigée vers la surface de butée (77).

12. Serrure à tourniquet selon l'une quelconque des revendications 1 à 11, **caractérisée en ce que** la languette (568) du tourniquet glisse sur une plaque de butée (552) qui est fixée sur le cadre (516) sur lequel est articulé ou fixé la porte, le clapet (512) ou analogue.

13. Serrure à tourniquet selon la revendication 12, **caractérisée en ce que** la plaque de butée (552) présente un contour extérieur (81) dirigé vers la plaque de fixation (528), qui est adapté au contour extérieur (83) de la plaque de fixation (528) pour la serrure à tourniquet, de préférence en s'agrippent l'un dans l'autre.

14. Serrure à tourniquet selon l'une quelconque des revendications 12 ou 13, **caractérisé en ce que** la plaque de butée (552) présente dans la zone de la surface de glissement pour la languette (568) du tourniquet un bourrelet (79) en saillie par rapport au plan (77).

15. Serrure à tourniquet selon la revendication 14, **caractérisée en ce que** le bourrelet (79) représente un arc de cercle autour de l'axe formé par la serrure à tourniquet.

16. Serrure à tourniquet selon l'une quelconque des revendications 12 à 15, **caractérisée en ce que** la plaque de butée présente deux trous longitudinaux (71) pour la réception de vis de fixation (73) qui sont à leur tour vissées dans les coulisseaux (553) placés dans les profils (547).

17. Serrure à tourniquet selon la revendication 16, **caractérisée en ce que** les trous longitudinaux forment une partie enfoncée (75) pour la tête de la vis de fixation (73).

18. Porte (12) présentant une serrure à tourniquet (10) selon au moins l'une quelconque des revendications 2 à 17, ladite porte, ainsi que le bâti ou le cadre associé, présentant des profils à rainure, dont la section est essentiellement rectangulaire ou carrée et qui présentent en leurs quatre côtés à chaque fois des rainures contre-dépouillées, **caractérisée en ce que** le bâti (416, 516, 616) de la serrure à tourniquet est placé dans un trou transversal (51, 551) disposé dans le profil à rainure, **en ce que** la plaque (238, 338) pouvant être glissée forme un renfoncement dans lequel la plaque pouvant être vissée (226, 326) peut être insérée sans tourner et **en ce que** les vis de fixation (436) pour la plaque pouvant être glissée (428, 582) sont maintenues par les coulisseaux (53, 553) disposés dans la rainure (49) contre-dépouillée.

19. Clapet présentant une serrure à tourniquet (10) selon au moins l'une quelconque des revendications 2 à 17, ledit clapet, ainsi que le bâti ou le cadre associé, présentant des profils à rainure, dont la section est essentiellement rectangulaire ou carrée et qui présentent en leurs quatre côtés à chaque fois des rainures contre-dépouillées, **caractérisée en ce que** le bâti (416, 516, 616) de la serrure à tourniquet est placé dans un trou transversal (51, 551) disposé dans le profil à rainure, **en ce que** la plaque (238, 338) pouvant être glissée forme un renfoncement dans lequel la plaque pouvant être vissée (226, 326) peut être insérée sans tourner et **en ce que** les vis de fixation (436) pour la plaque pouvant être glissée (428, 582) sont maintenues par les coulisseaux (53, 553) disposés dans la rainure (49) contre-dépouillée.

20. Utilisation de la serrure à tourniquet (10) selon au moins l'une quelconque des revendications 1, 3 à 10, 12 à 17 pour des portes (12) à paroi épaisse, pour des clapets ou analogues.

21. Utilisation de la serrure à tourniquet (10) selon au moins l'une quelconque des revendications 2 à 17 pour des portes (12), des clapets ou analogues, lesdites portes, lesdits clapets ou analogues ainsi qu'à chaque fois les bâtis ou cadre associés présentant des profils à rainure dont la section est essentiellement rectangulaire ou carrée et qui présentent sur leurs quatre côtés à chaque fois des rainures contre-dépouillées.
